# EUROPEAN PATENT APPLICATION

(11) **EP 1 965 315 A1**
(43) Date of publication of application: **03.09.2008**
(21) Application number: 07103455.7
(22) Date of filing: 02.03.2007
(51) Int. Cl.: G06F 17/30

(54) **Automatic update of document clustering system and method**

(71) Applicant: Nederlandse Organisatie voor Toegepast-Natuurwetenschappelijk Onderzoek TNO, 2628 VK Delft (NL)
(72) Inventor: Kraaij, Wessel, 3062 XM Rotterdam (NL)
(74) Representative: van Loon, C.J.J.

(57) **Abstract**

In an electronic document processing a processor defines clusters containing documents from the set of electronic documents. The processor selects an update subset of said electronic documents, limiting a content of the update subset to at most a first predetermined number of electronic documents. A reference subset of said electronic documents is selected, limiting a content of the reference subset to at most a second predetermined number of electronic documents, the reference subset properly containing the update subset. The electronic documents are assigned or re-assigned to the clusters from only the update subset, on the basis of similarity of the electronic documents to respective ones of the clusters computed from a measure of similarity between the electronic documents in the update subset and individual electronic documents from each respective one of the clusters, limited to individual electronic documents that belong to the reference subset.

## Description

The invention relates to an automatic document clustering system and method.

Document clustering may be used for example to automatically organize news items into groups of news items that relate to the same topic. The news items may be electronic files containing text and/or audio, video or other forms of data. Herein the general term "documents" will be used, which includes items comprising any type of machine readable data. The organization of documents into groups is termed clustering, which involves defining groups (clusters) and assigning individual documents to clusters with documents with similar content.

A document clustering method has been described in an article titled "TNO at TDT2001: Language Model-Based Topic Detection", by Martijn Spitters and Wessel Kraaij, published in the Proceedings of the LREC 2002 workshop "Event Modelling for Multilingual Document Linking", pages 42-46, and in the proceedings of the workshop on Topic Detection and Tracking (TDT) Workshop 2001, November 2001, published on the Internet at NIST.@inProceedings{2001spitters01. This article proposes a form of clustering that defines a set of recent documents with a date within a time interval of predetermined duration from a current date. An iterative process is used, with a step wherein a computer assigns the recent documents to clusters by comparing each recent document with the documents in the clusters and assigning the recent document to a cluster with most similar documents, or starting a new cluster containing the document if there is no sufficiently similar cluster. The computer repeats a number of times, each time using the clusters as they have evolved during the preceding step, whereby each recent document may be reassigned to another cluster to account for the fact that the clusters may have been altered by the assignment of recent documents to the clusters.

As will be appreciated that this involves process considerable computational resources. For each assignment of a document a comparison with all other documents must be made. The amount of computational resources is kept in check by assigning and re-assigning only recent documents. Documents that are not recent, i.e. that do not have a date within the time interval, are not re-assigned. Furthermore the article proposes to "freeze" clusters to which no documents have been added during a further time interval. No comparison is made between recent documents and documents in frozen clusters and recent documents are not assigned to frozen clusters. In this way computational complexity is limited.

Unfortunately, although many clusters are short lived, some do not freeze over a very long time. Moreover, the complexity of the clustering still grows more than in proportion with the number of documents as more documents are added, even with the limitations disclosed in the article.

Among others, it is an object of the invention to provide for a method and apparatus for automatic document clustering wherein growth of the computational load with increasing number of documents can be better controlled with a minimum detrimental effect on cluster quality.

A system according to claim 1 is provided. Herein a processor that performs clustering selects an update subset of electronic documents and a larger reference subset. Assignment and reassignment of the electronic documents to clusters is updated only for documents from the update subset, using document to cluster distances computed using only documents from the reference subset, from a measure of similarity between the electronic documents in the update subset and individual electronic documents from each respective one of the clusters. In this way the computational complexity of the clustering is controlled while retaining good cluster quality.

In an embodiment the documents are received progressively and the update subset and reference subset are progressively changed, to execute successive repetitions of the step of assigning and reassigning, starting from the clusters obtained in a preceding repetition. In this way the computational complexity of progressive clustering is controlled.

In a further embodiment a temporal limitation may be imposed on the update subset and the reference subset. This makes it possible to limit complexity use time of reception as an additional factor in clustering.

These and other object and advantageous aspects will become apparent from a description of exemplary embodiment, using the accompanying drawings in which
Figure 1 shows a document processing system;
Figure 2 shows a flow chart of document handling ;
Figure 3 shows a flow chart of clustering.

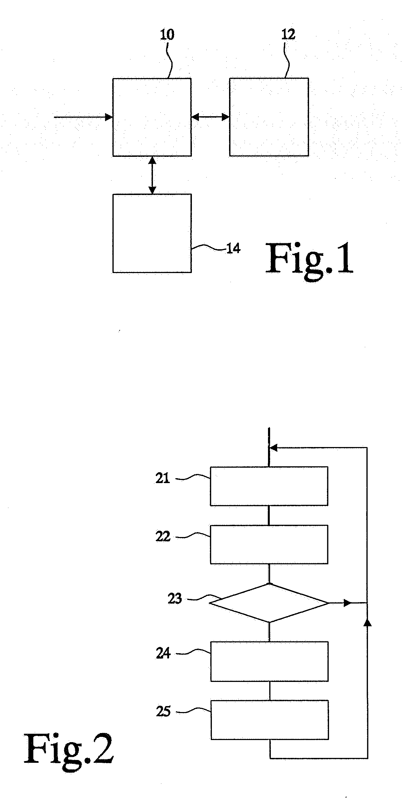

Figure 1 shows a document processing system, comprising a processor 10, a mass storage device 12 and a user interface 14 coupled to the processor 10. In operation processor 10 maintains identifiers of a plurality of clusters and information that assigns electronic documents each to an associated one of the clusters.

The assignment of documents to clusters is used as a means to select documents for retrieval. User interface 14 is configured to accept queries, for example in the form of explicit cluster references, or keywords or documents. For the sake of simplicity, an embodiment will be described wherein processor 10 processes these queries, but it should be understood that alternatively a further processor may be used. Processor 10 is configured to identify clusters associated with the queries, to use the identified clusters to select document and to retrieve the selected documents from mass storage device 12. Furthermore processor 10 causes user interface to render (e.g. visually display) the selected electronic documents in response to the query.

During operation electronic documents are successively supplied to processor 10 which stores the electronic documents in mass storage device 12. After the electronic documents have been received processor 10 assigns the electronic documents to clusters and processor 10 evaluates whether the assignment of previously received electronic documents should be changed in view of the newly received documents.

Figure 2 shows a flow chart of operation by processor 10. In a first step 21 processor 10 receives an electronic document, assigns a date of reception to the document and stores the document in mass storage device 12. In a second step 22 processor 10 computes distance measures between the electronic document and a plurality of previously received electronic documents with assigned dates of reception within a reference window.

The distance measures may be based on a computation of a statistical profile for the electronic document and a comparison of that statistical profile with statistical profiles of the previously received documents with assigned dates of reception within the reference window. Such computations of distance measures between pairs of documents are known per se. Still in second step 22, processor 10 stores the computed distance measures in a local memory of the processor 10 or in mass storage device 12.

In a third step 23 processor 10 tests whether a predetermined condition for reclustering has been met. In an embodiment the condition is that a threshold number of documents has been received since a last previous execution of clustering, in an alternative embodiment the condition is that a predetermined time period has expired since the last previous execution of clustering, as a further alternative the logic "or" of both conditions may be used.

If it is determined in third step 23 that the condition is not met, processor 10 returns to first step 21 for a new document. If the predetermined condition is met, processor 10 proceeds to a fourth step 24 wherein cluster contents are updated. An embodiment of fourth step 24 will be described in more detail in the following. After fourth step 24 processor 10 executes a fifth step 25, wherein processor moves the reference window of documents with respect to which distance measures will be computed. In an embodiment the reference window is advanced by an amount of time selected so that the reference window includes only a first predetermined number of most recently received electronic documents. Subsequently processor 10 returns to first step 21.

As mentioned, processor 10 maintains identifiers of a plurality of clusters and information that assigns each document to an associated cluster. In fourth step 24 processor 10 updates the assignments of documents to clusters and if necessary processor 10 defines new clusters. In an embodiment only documents from an update subset of all documents are candidates for reassignment. Documents outside this update subset are not reassigned. Thus, the update subset forms a proper subset of the set of all documents (as used herein a "proper subset of a set" is a subset that consists of less than all elements of the set and a first set "properly contains" a second set if the second set contains only elements from the first set but not all elements of the first set). In a further embodiment the update subset comprises only a second predetermined number of most recently received documents.

Thus, there are two relevant groups of the set of documents: the update subset, which, as explained in the following, may still be reassigned to different clusters, and the documents in the reference window, which will be used to compute distance to clusters. In an embodiment the number of documents that may still be reassigned in smaller than the number of documents that are used to compute distances. For example, one thousand documents in the update subset may still be reassigned and ten thousand documents in the reference window are used to compute distances. That is, the first predetermined number is ten thousand and the second predetermined number is one thousand.

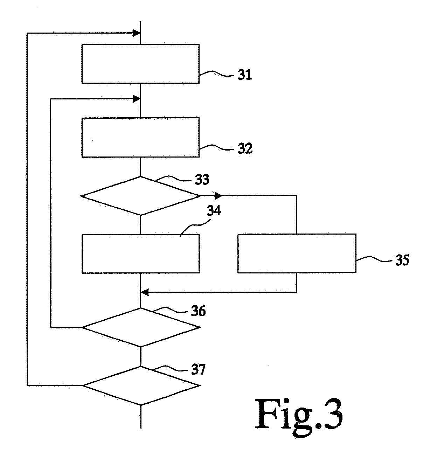

Figure 3 shows an embodiment of fourth step 24 in more detail. In a first sub-step 31 processor 10 selects a first document from the update subset and makes the selected document "current document" for the purpose of the following sub-steps. In an embodiment processor 10 selects the oldest received document that has not yet been assigned to any cluster as current document in first sub-step 31.

In a second sub-step 32 processor 10 selects a cluster that is closest to the current document. Processor 10 computes the distance between the current document and each particular cluster, by combining the distance measures between the current document and each of the documents in the particular cluster that has a date of reception within the reference window. Methods of computing distance to a cluster are known per se and will not be described in detail.

In a third sub-step 33 processor 10 tests whether the distance to the closest cluster is below a threshold. If so, processor 10 proceeds to fourth sub-step 34, wherein the current document is assigned to the closest cluster. If the distance to the closest cluster is above the threshold, processor 10 proceeds to fifth sub-step 35, wherein processor 10 adds a new cluster and assigns the current document to the new cluster. After fourth and fifth sub-steps processor 10 executes a sixth sub-step 36, wherein another document is made "current document" before returning to second sub-step 32. This is repeated until all documents in the update subset have been made current document. In an embodiment first all documents that have not yet been assigned to any cluster are made "current document" and subsequently the remaining documents in the update sub-set are made "current document".

In a seventh sub-step 37 processor 10 tests whether the preceding steps have resulted in reassignment of document to other clusters. If so, processor repeats the preceding sub-steps from first sub-step 31. In an embodiment the distance threshold is raised before these steps are repeated, e.g. as a function of the square of the number of repetitions. This facilitates fast convergence. If the preceding steps have not resulted in reassignment, reclustering finishes and processor 10 proceeds to fifth step 25 of figure 2, wherein the start of the reference window is moved, so that the least recently received documents from the old reference window will no longer be used to compute distance to the clusters.

As will be appreciated the clustering process of figure 3 results in assignment and possible re-assignment of documents to clusters. It should carefully be noted that the complexity of this process is held below a predetermined level, by limiting the number of documents from the clusters that will be used to compute distance to the clusters (i.e. by limiting the reference window). In this way computational complexity does not grow uncontrollably with an increase in the number of documents, which makes it possible to use a processor 10 of realistic capacity for handling the documents at any time.

Furthermore the computational complexity is controlled by limiting the update subset of documents that can be reassigned. This also increases stability of cluster assignment. The effect of this is that clusters are able to follow evolution of a topic in time, without losing "old" documents that have been previously assigned to the cluster.

Although embodiments have been described wherein the reference window and the update subset are controlled exclusively to set the number of documents within the reference window and the update subset, it should be understood that further conditions, such as lapse of time, may be added to impose further limits on the reference window and the update subset. Thus for example the temporal extent of the reference window may be limited to a first predetermined value of for example a week. Similarly the temporal extent of the update subset may be limited to a second predetermined value of for example three months.

It should be appreciated that the sub-process of figure 3 is only an exemplary embodiment of cluster updating. Other implementations of cluster updating are possible. For example, the update sub-process may be integrated more with normal reception of documents, by assigning each document to a clusters as it is received and reassigning other documents in the wake of that reassignment, without waiting in third step 23 until a predetermined number of documents has been received or a predetermined time has elapsed.

As another example, instead of a document-by-document re-assignment process shown in the example of figure 3 a clustering process may be used wherein a plurality of documents are reassigned collectively.

Furthermore, although an example has been described wherein the assignment to clusters is used to respond to user queries, it should be appreciated that cluster assignment may also be used for other purposes, such as control of selection of storage locations of documents on the basis of cluster assignment, or further processing of groups of documents from a same cluster.

## Claims

1. An electronic document processing system comprising a processor and a storage device for storing electronic documents, the processor being configured to
- define clusters containing documents from the set of electronic documents;
- select an update subset of said electronic documents, limiting a content of the update subset to at most a first predetermined number of electronic documents;
- select a reference subset of said electronic documents, limiting a content of the reference subset to at most a second predetermined number of electronic documents, the reference subset properly containing the update subset;
- assign or reassign the electronic documents from only the update subset to the clusters, on the basis of similarity of the electronic documents to respective ones of the clusters computed from a measure of similarity between the electronic documents in the update subset and individual electronic documents from each respective one of the clusters, limited to individual electronic documents that belong to the reference subset.

2. An electronic document processing system according to claim 1, wherein the processor is configured to receive documents progressively and to change the update subset and reference subset are progressively, the processor being configured to perform repetitions of said assigning and reassigning, each repetition starting from the clusters obtained in a preceding repetition, each repetition being performed for a respective changed update subset and reference subset.

3. An electronic document processing system according to claim 1 or 2, wherein the processor is configured to select the update subset and the reference subset to limit the numbers of electronic documents in the update and reference subset to at most the first and second predetermined number of electronic documents received most recently before a time of execution of the assigning step.

4. An electronic document processing system according to any one of the preceding claims, wherein the processor is configured to limit the reference subset and the update subset, making the reference subset and the update subset consist at most of electronic documents received within a first and second time interval of respective predetermined durations, extending backward from a time of execution of the method respectively, the second time interval properly containing the first time interval.

5. An electronic document processing system according to any one of the preceding claims, wherein the processor is configured perform said assigning or reassigning of the electronic documents to clusters by executing repeated cycles of assigning and re-assigning electronic documents from the update subset to the clusters, the electronic documents being re-assigned in each cycle on the basis of the measure of similarity between the electronic documents and electronic documents assigned to the respective ones of the clusters in a previous cycle.

6. An electronic document processing system according to claim 5, wherein the measure of similarity is compared with a distance threshold and the document is assigned or reassigned to the nearest cluster if the measure of similarity between the document and the nearest cluster is below the distance threshold, the distance threshold being increased between the successive cycles.

7. A method of clustering a set of electronic documents, the method comprising using a processor to perform the steps of
- defining clusters containing electronic documents from the set;
- selecting an update subset of said electronic documents, limiting a content of the update subset to at most a first predetermined number of electronic documents;
- selecting a reference subset of said electronic documents, limiting a content of the reference subset at most a second predetermined number of electronic documents, the reference subset properly containing the update subset;
- assigning or reassigning the electronic documents from only the update subset to the clusters on the basis of similarity of the electronic documents to respective ones of the clusters computed from a measure of similarity between the electronic documents in the update subset and individual electronic documents from each respective one of the clusters, limited to individual electronic documents that belong to the reference subset.

8. A method according to claim 7, comprising
- progressively receiving the electronic documents;
- progressively changing the update subset and reference subset;
- performing repetitions of said assigning and reassigning, each repetition starting from the clusters obtained in a preceding repetition, each repetition being performed for a respective changed update subset and reference subset.

9. A method according to claim 7 or 8, wherein the update subset and the reference subset are controlled to limit the numbers of electronic documents in the update and reference subset to at most the first and second predetermined number of electronic documents received most recently before a time of execution of the assigning step.

10. A method according to any one of claims 7 to 8, wherein the reference subset and the update subset consist at most of electronic documents received within a first and second time interval of respective predetermined durations, extending backward from a time of execution of the method respectively, the second time interval properly containing the first time interval.

11. A method according to claim any one of claims 7 to 9, wherein the step of assigning or reassigning electronic documents to clusters comprises executing repeated cycles of assigning and re-assigning electronic documents from the update subset to the clusters, the electronic documents being re-assigned in each cycle on the basis of the measure of similarity between the electronic documents and electronic documents assigned to the respective ones of the clusters in a previous cycle.

12. A computer program product comprising a program of computer instructions that, when executed by a programmable computer cause the computer to perform the method of any one of claims 7 to 11.
